# FASCICULE DE BREVET EUROPEEN

(11) **EP 1 673 544 B1**
(45) Date de publication et mention de la délivrance du brevet: **22.06.2011**
(21) Numéro de dépôt: 04767922.0
(22) Date de dépôt: 28.07.2004
(51) Int. Cl.: F16C 33/58

(54) **PALIER DE CENTRAGE ET DE GUIDAGE EN ROTATION D UN ELEMENT TOURNANT SUR UN AUTRE ELEMENT ET ENSEMBLE D ELEMENTS COMPRENANT UN TEL PALIER**
LAGER ZUM ZENTRIEREN UND DREHBAREN FÜHREN EINES ROTAIONSELEMENTS AN EINEM ANDEREN ELEMENT UND SOLCH EIN LAGER UMFASSENDE ANORDNUNG VON ELEMENTEN
BEARING FOR CENTERING AND GUIDING IN ROTATION A ROTARY ELEMENT ON ANOTHER ELEMENT AND ASSEMBLY OF ELEMENTS COMPRISING SUCH A BEARING

(30) Priorité: 04.08.2003 FR 0309626
(43) Date de publication de la demande: 28.06.2006
(73) Titulaire: Valeo Embrayages, 80009 Amiens Cedex 1 (FR)
(72) Inventeur: FENIOUX, Daniel, F-80480 Saleux (FR); SOARES, Cesario, F-28300 Fresnay le Gilmert (FR)
(74) Mandataire: Jeuland, Mickaël
(86) Numéro de dépôt international: PCT/FR2004/050361
(87) Numéro de publication internationale: WO 2005/017378

(56) Documents cités:
- FR-A- 2 262 222
- FR-A- 2 754 033
- GB-A- 1 224 300
- GB-A- 2 256 236
- GB-A- 2 357 135
- NL-C- 47 842
- US-A- 3 667 097
- US-A- 5 775 819

## Description

L'invention concerne un palier de centrage et de guidage en rotation d'un volant d'inertie dans un double volant amortisseur, en particulier pour véhicule automobile.

Dans la technique actuelle, un élément tournant est souvent centré et guidé en rotation sur un autre élément au moyen d'un roulement qui est en général monté par emmanchement de ses bagues interne et externe sur une portée cylindrique et dans un alésage des éléments correspondants, ce qui oblige à usiner des surfaces cylindriques avec une certaine précision sur ces éléments. Il faut, en outre, associer aux bagues du roulement des moyens de retenue axiale qui peuvent être constitués par un épaulement de la portée cylindrique et de l'alésage précités et par des circlips engagés dans des gorges annulaires de la portée cylindrique et de l'alésage précités.

Pour simplifier le montage de ces roulements et réduire les coûts correspondants, on a déjà tenté de les souder par leurs bagues internes et externes sur les éléments associés mais le dégagement de chaleur correspondant à la soudure détériore les joints d'étanchéité de ces roulements et modifie la dureté de leurs pistes de roulement, de sorte que ces tentatives n'ont pas connu le succès escompté.

La demanderesse a proposé, dans son brevet antérieur FR-A-2 754 033, une solution au problème de la soudure d'un roulement sur les volants d'inertie d'un double volant amortisseur pour véhicule automobile, cette solution consistant à souder les bagues par appui axial sur les volants d'inertie et par décharge d'un condensateur, cette technique ayant l'avantage d'être réalisable sans apport de matière en un temps très court de sorte que la soudure ne provoque pas d'échauffement intense qui détériorerait les joints d'étanchéité des roulements et modifierait la dureté de leurs pistes de roulement.

La demande a pour objet un double volant amortisseur, en particulier pour véhicule automobile, comprenant un roulement soudé sur ces volants d'inertie et présentant d'autres avantages liés au montage du roulement par soudure sur les volants d'inertie.

Elle propose à cet effet un double volant amortisseur tel que défini par la revendication 1.

Dans le palier selon l'invention, une bague est donc soudée sur un volant, non pas au niveau d'un joint d'étanchéité ou d'une piste de roulement, mais à l'extrémité d'un prolongement axial qui est écartée du joint d'étanchéité et de la piste de roulement. On réduit ainsi les risques de détérioration du joint d'étanchéité et de la piste de roulement.

Corollairement, on peut utiliser pour la soudure de cette bague une technique autre que la soudure par appui et décharge de condensateur.

Selon une autre caractéristique de l'invention, le prolongement axial de la bague précitée est cylindrique.

Cela permet de souder cette bague sur le volant associé par la face annulaire d'extrémité du prolongement axial, qui est continue et assure ainsi une fixation très résistante du roulement sur le volant.

Dans un mode de réalisation préféré de l'invention, chaque bague de roulement comporte au moins un prolongement axial précité et le prolongement axial d'une bague s'étend d'un côté du roulement tandis que le prolongement axial de l'autre bague s'étend de l'autre côté du roulement.

Avantageusement, la longueur du ou de chaque prolongement axial précité est comprise entre environ 25 et environ 50% de la longueur totale de la bague concernée.

Les bagues du roulement peuvent être d'un type classique et sont alors réalisées en acier avec une certaine épaisseur radiale. Elles peuvent en variante avoir une épaisseur radiale réduite pour diminuer l'encombrement radial du roulement et elles peuvent également être réalisées en tôle.

Dans un mode de réalisation préféré de l'invention, la bague interne du roulement est fixée par son prolongement axial au volant d'inertie secondaire et la bague externe est fixée par son prolongement axial au volant d'inertie primaire.

La zone de soudure de chaque bague du roulement sur le volant d'inertie correspondant s'étend entre un orifice central du volant d'inertie et des orifices formés dans ce volant pour le passage de moyens de fixation sur l'arbre moteur. Le bord de l'orifice central du volant primaire comprend des échancrures formées au voisinage des orifices de passage des moyens de fixation, ces échancrures s'étendant dans la zone de soudure du prolongement axial de la bague du roulement.

Ainsi, d'éventuelles bavures de soudure ne débordent pas au voisinage des orifices de passage des moyens de fixation sur l'arbre moteur et ne peuvent contrarier le montage correct de ces moyens de fixation.

Selon encore une autre caractéristique de l'invention, au moins un prolongement axial d'une bague du roulement sert au centrage d'au moins une partie des moyens de friction d'un amortisseur de torsion monté entre les volants d'inertie primaire et secondaire.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un double volant amortisseur comprenant un palier selon l'invention, les trois sous-ensembles de ce double volant amortisseur étant représentés axialement séparés les uns des autres ;
- la figure 2 est une vue schématique en coupe axiale d'une variante de réalisation de ce double volant amortisseur.

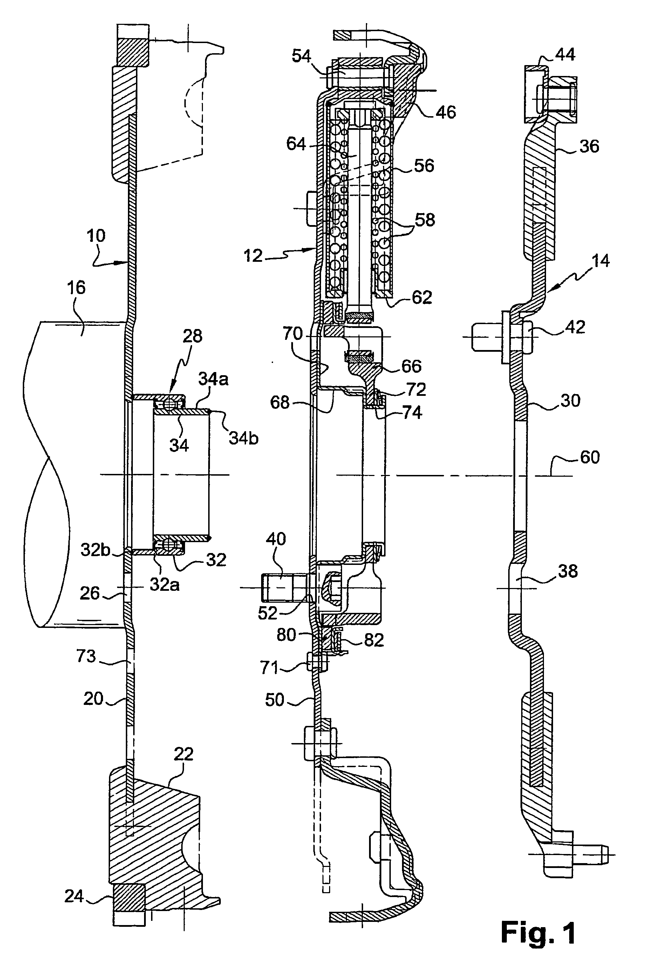

On se réfère d'abord à la figure 1 qui représente schématiquement trois sous-ensembles de composants d'un double volant amortisseur, en particulier pour véhicule automobile, ces trois sous-ensembles formant essentiellement un volant d'inertie primaire 10, un amortisseur de torsion 12 et un volant d'inertie secondaire 14 qui sont destinés à être juxtaposés axialement et montés en bout d'un arbre moteur 16 tel que le vilebrequin d'un moteur à combustion interne de véhicule automobile.

Le volant primaire 10 comprend essentiellement une tôle annulaire 20 axialement flexible, qui porte à sa périphérie radialement externe une masse d'inertie 22 surmoulée sur la tôle annulaire flexible 20. Une couronne de démarreur 24 est montée et fixée sur la partie radialement externe de la masse annulaire 22.

La partie radialement interne de la tôle flexible 20 comporte une série d'orifices 26 répartis sur une circonférence et qui servent au passage de vis 40 de fixation du double volant amortisseur sur l'extrémité de l'arbre 16. Ces orifices 26 entourent un palier 28 de centrage et de guidage en rotation du volant secondaire 14, ce palier 28 étant formé par un roulement dont les bagues interne et externe sont destinées à être soudées l'une sur la tôle annulaire flexible 20 du volant primaire 10 et l'autre sur une tôle annulaire 30 du volant secondaire 14.

Dans l'exemple de réalisation représenté en figure 1, c'est la bague externe 32 du roulement qui est soudée sur la tôle annulaire flexible 20 du volant primaire 10 et la bague interne 34 qui est soudée sur la tôle annulaire 30 du volant secondaire 14.

Chaque bague 32, 34 du roulement comporte un prolongement axial 32a, 34a respectivement, qui s'étend sur une certaine longueur d'un côté ou de l'autre respectivement du roulement et qui vient en appui axial sur la tôle annulaire 20, 30 respectivement du volant d'inertie correspondant.

Plus précisément, dans le mode de réalisation de la figure 1, le prolongement axial 32a de la bague externe 32 du roulement s'étend en direction de la tôle annulaire flexible 20 du volant d'inertie primaire 10 et est fixé à cette tôle annulaire 20 par un cordon de soudure 32b à son extrémité libre. Le prolongement axial 34a de la bague interne 34 du roulement s'étend dans la direction opposée, c'est-à-dire vers la tôle annulaire 30 du volant d'inertie secondaire 14 et est fixé à celle-ci par un cordon de soudure 34d formé à son extrémité libre.

Dans un mode de réalisation particulier de l'invention, la soudure se fait par appui axial de l'extrémité libre du prolongement 32a, 34a d'une bague du roulement sur la tôle annulaire 20, 30 correspondante et par une décharge de condensateur, comme décrit dans le brevet antérieur FR2754033 de la demanderesse, cette décharge de condensateur ayant une durée extrêmement brève qui provoque un échauffement local important dans la zone d'appui de l'extrémité axiale du prolongement sur la tôle annulaire correspondante et par la formation d'un cordon de soudure dans cette zone, sans apport de métal.

Dans l'exemple représenté, chaque prolongement axial 32a, 34a d'une bague du roulement a une longueur sensiblement égale à la moitié de la longueur totale de la bague concernée. De façon générale, la longueur du prolongement axial peut être comprise entre environ 25 et environ 50% de la longueur totale de la bague correspondante.

Cette longueur permet d'éloigner les cordons de soudure 32b, 34b de la partie du roulement qui comporte les joints d'étanchéité et la piste de roulement des billes ou des organes roulants de ce roulement, ces joints d'étanchéité et cette piste de roulement étant ainsi mieux protégés contre les risques de détérioration par échauffement.

Corollairement, cela permet aussi d'utiliser d'autres techniques de soudure que la décharge d'un condensateur pour fixer les extrémités libres des prolongements des bagues sur les tôles annulaires des volants d'inertie.

Dans l'exemple de réalisation de la figure 1, le volant d'inertie secondaire 14 est essentiellement formé de la tôle annulaire 30 précitée et d'une masse d'inertie 36 qui est surmoulée sur la partie périphérique radialement externe de la tôle annulaire 30.

Des orifices 38 répartis sur une circonférence sont formés dans la tôle annulaire 30 pour permettre l'accès et/ou le passage des vis 40 de fixation sur l'arbre moteur 16 et d'autres orifices sont formés dans cette tôle annulaire 30 pour le montage de rivets 42 qui font partie des moyens de sortie de l'amortisseur de torsion 12.

Des pièces 44 de limitation de débattement angulaire sont montées par des rivets sur la partie périphérique radialement externe de la masse annulaire 36 du côté tourné vers l'amortisseur de torsion 12 pour coopérer avec des butées 46 en caoutchouc ou analogue portées par cet amortisseur de torsion.

L'amortisseur de torsion 12 comprend essentiellement une tôle annulaire flexible 50 qui s'étend parallèlement à la tôle annulaire flexible 20 du volant d'inertie primaire et qui est destinée à être précontrainte élastiquement contre celle-ci à l'état assemblé du double volant amortisseur, pour amortir les vibrations et flexions axiales du volant primaire 10.

A sa partie périphérique radialement externe, la tôle annulaire 50 porte des axes 54 d'articulation de boîtes cylindriques 56 qui s'étendent de façon sensiblement radiale dans l'amortisseur de torsion 12 et dans lesquelles sont logés des ressorts 58 tels que des ressorts à spires hélicoïdales. L'extrémité des boîtes 56 située du côté de l'axe de rotation 60 est fermée par une plaque 62 sur laquelle s'appuient les ressorts 58 et qui est traversée axialement par une tige 64 qui s'étend à l'intérieur de la boîte 56 et des ressorts 58 correspondants et dont l'extrémité radialement extérieure porte des moyens d'appui sur les ressorts 58.

L'extrémité radialement interne de chaque tige 64 est articulée sur un rivet 42 du volant secondaire 14 et est montée dans un logement correspondant d'une pièce annulaire 66 centrée sur l'axe de rotation 60 au moyen d'une pièce cylindrique 68 en tôle mince qui s'étend axialement entre la tôle annulaire 50 de l'amortisseur de torsion et la tôle annulaire 30 du volant secondaire 14.

La tôle cylindrique 68 est fixée sur la tôle annulaire 50 de l'amortisseur de torsion, par exemple au moyen d'un rebord annulaire 70 qui est formé à son extrémité correspondante et qui est fixé par des rivets 71 sur la tôle annulaire 50.

La pièce annulaire 66 qui porte les extrémités des tiges 64 comporte également une nervure radialement interne 72 qui forme une rondelle de friction serrée axialement dans une gorge annulaire 74 de la pièce cylindrique 68 par une rondelle de serrage et une rondelle d'application.

La pièce annulaire 66 comporte ou entraîne à sa périphérie externe une autre rondelle de friction 80 qui est serrée axialement sur le rebord annulaire 70 de la pièce cylindrique 68 par une rondelle de serrage et une rondelle d'application prenant appui sur une rondelle de support 82 solidaire de la tôle annulaire 50.

La pièce cylindrique 68 en tôle mince qui sert au centrage des moyens de friction de l'amortisseur 12 est elle-même centrée sur le prolongement axial 32a de la bague externe 32 du roulement 28 au niveau de son rebord annulaire 70 et sur le prolongement axial 34a de la bague interne 34 du roulement 28 au niveau de sa gorge annulaire 74.

Lors de l'assemblage et du montage du double volant amortisseur selon l'invention, les trois sous-ensembles formés par le volant primaire 10, l'amortisseur de torsion 12 et le volant secondaire 14 sont assemblés indépendamment les uns des autres, le roulement 28 étant soudé par l'extrémité libre du prolongement axial 32a de sa bague externe 32 sur la tôle annulaire flexible 20 du volant primaire 10, l'extrémité libre du prolongement axial 32a étant appliquée sur la tôle annulaire 20 autour de l'orifice central de celle-ci et radialement à l'intérieur de la circonférence sur laquelle sont formés les trous 26 de passage des vis 40.

L'amortisseur de torsion 12 est ensuite monté sur le volant d'inertie secondaire 14 par engagement des extrémités radialement internes des tiges 64 sur les rivets 42 du volant secondaire 14 puis l'ensemble formé par l'amortisseur de torsion et le volant secondaire 14 est rapproché axialement du volant primaire 10 et est positionné angulairement de façon correcte par rapport à celui-ci. La bague annulaire 30 du volant secondaire 14 est en appui axial sur l'extrémité libre du prolongement 34a de la bague interne 34 du roulement 28 et est soudée à cette extrémité libre par une décharge de condensateur par exemple. Les bagues du roulement forment ainsi une entretoise axiale entre les deux volants.

Le double volant amortisseur ainsi réalisé est ensuite fixé sur l'extrémité de l'arbre moteur 16 au moyen des vis 40, qui sont engagées dans les trous 38 de la tôle annulaire 30 du volant secondaire 14, qui passent dans des orifices correspondants de la tôle annulaire 50 de l'amortisseur de torsion 12 et dans les orifices 26 de la tôle annulaire flexible 20 du volant primaire 10 et qui sont finalement vissées dans des trous borgnes filetés de l'extrémité de l'arbre 16.

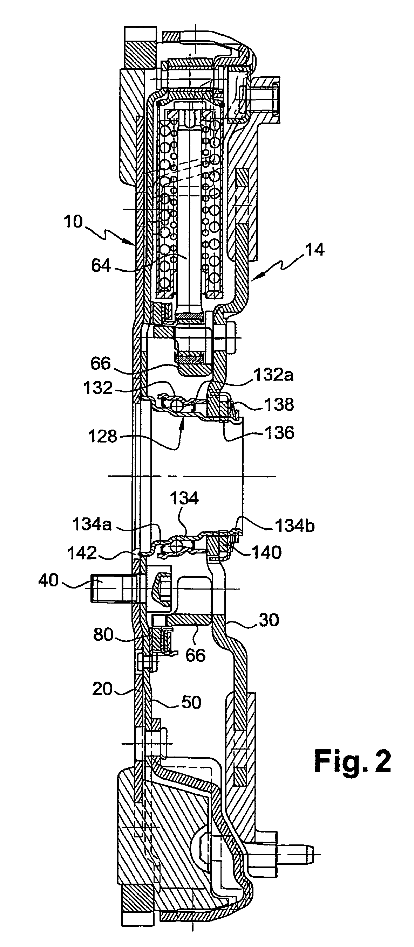

Dans la variante de réalisation représentée en figure 2 à l'état assemblé, on retrouve sensiblement les mêmes composants qu'en figure 1, la différence essentielle entre les deux modes de réalisation étant que le roulement 128 de la figure 2 comprend des bagues externe 132 et interne 134 réalisées en tôle.

La bague externe 132 comprend un prolongement axial 132a qui s'étend en direction de la tôle annulaire 30 du volant secondaire 14 et qui est soudé à cette tôle annulaire 30 par son extrémité libre. La bague interne 134 du roulement comprend un prolongement axial 134a qui s'étend en direction de la tôle annulaire flexible 20 du volant primaire 10 et qui est soudé à cette tôle annulaire 20 à son extrémité libre. La bague interne 134 comprend un autre prolongement axial 134b qui s'étend en direction du volant secondaire 14 et qui passe à travers l'ouverture centrale de la tôle annulaire pour se terminer au-delà de cette tôle annulaire 30. Ce prolongement 134b supporte des moyens de friction comprenant une rondelle de friction 136 solidaire en rotation du prolongement 134b de la bague interne 134 du roulement et serrée axialement sur la tôle annulaire 30 du volant secondaire par un jonc élastique ouvert serré dans une rainure du prolongement axial 134b et qui maintient une rondelle élastique 138 portée par le prolongement 134b, avec interposition entre la rondelle de friction 136 et la rondelle élastique 138 d'une rondelle d'application 140 qui est solidaire en rotation de la tôle annulaire du volant secondaire 14.

La pièce annulaire 66 qui reçoit les extrémités des tiges 64 de l'amortisseur de torsion ne comprend pas la nervure annulaire 72 précitée formant rondelle de friction mais entraîne en rotation une rondelle de friction 80 qui est serrée axialement sur la tôle annulaire 50 de l'amortisseur de torsion avec interposition d'une rondelle d'application entre cette rondelle de friction 80 et la tôle annulaire 50.

Pour le reste, la structure du double volant amortisseur correspond à celle déjà décrite et représentée en figure 1.

Au montage, le roulement 128 peut d'abord être fixé sur le volant secondaire 14 par soudure de l'extrémité libre du prolongement 132a de sa bague externe 132 sur la tôle annulaire 30, puis, après mise en place de l'amortisseur de torsion et du volant secondaire 14, le prolongement axial 134a de la bague interne 134 du roulement est fixé par soudure à la tôle annulaire 20 du volant primaire 10. Les moyens de friction 136, 138 et 140 sont ensuite mis en place sur le prolongement 134b de la bague interne 134 et sur la tôle annulaire 30 du volant secondaire.

Des échancrures 142 sont formées dans le bord de l'orifice central de la tôle annulaire flexible 20 du volant primaire 10, en alignement radial avec les orifices de passage des vis 40, pour éviter que des bavures de soudure de l'extrémité libre du prolongement 134a sur la tôle annulaire 20 viennent gêner le serrage correct des vis de fixation 40 et l'application de la partie radialement interne de la tôle annulaire 50 de l'amortisseur de torsion 12 sur la partie radialement interne correspondante de la tôle annulaire flexible 20 du volant primaire 10.

## Revendications

1. Double volant amortisseur, en particulier pour véhicule automobile, comprenant un volant d'inertie primaire (10) et un volant d'inertie secondaire (14) centré et guidé sur le volant d'inertie primaire par un roulement ayant des bagues interne et externe (32, 34) fixées par appui axial et soudure d'une de leurs extrémités respectivement sur le votant d'inertie primaire (10) et sur le volant d'inertie secondaire (14), ou inversement, **caractérisé en ce qu'**au moins l'une des bagues (32, 34) comprend un prolongement axial (32a, 34a) qui s'étend d'un côté du roulement (28) et dont l'extrémité libre est fixée par un cordon de soudure sur l'un des volants d'inertie.

2. Double volant amortisseur selon la revendication 1, **caractérisé en ce que** le prolongement axial (32a, 34a) est cylindrique.

3. Double volant amortisseur selon la revendication 1 ou 2, **caractérisé en ce que** chaque bague (32, 34) du roulement comporte au moins un prolongement axial (32a, 34a) précité.

4. Double volant amortisseur selon la revendication 3, **caractérisé en ce que** le prolongement axial (32a) d'une bague (32) s'étend d'un côté du roulement et le prolongement axial (34a) de l'autre bague (34) s'étend de l'autre côté du roulement.

5. Double volant amortisseur selon l'une des revendications précédentes, **caractérisé en ce que** la longueur du prolongement axial (32a,34a) d'une bague est comprise entre environ 20 et environ 50% de la longueur totale de la bague.

6. Double volant amortisseur selon l'une des revendications 1 à 5, **caractérisé en ce que** la ou chaque bague est soudée par appui axial et décharge de condensateur.

7. Double volant amortisseur l'une des revendications 1 à 6, **caractérisé en ce que** la bague interne (34) du roulement est fixée au volant secondaire (32) et la bague externe (32) au volant primaire (10).

8. Double volant amortisseur l'une des revendications 1 à 6, **caractérisé en ce que** la bague interne (134) du roulement est fixée au volant primaire (10) et la bague externe (132) au volant secondaire (14).

9. Double volant amortisseur selon l'une des revendications 1 à 8, **caractérisé en ce que** les zones de soudure des bagues du roulement sur les volants primaire (10) et secondaire (14) s'étendent entre le bord périphérique d'un orifice central de chaque volant et des orifices (26) de passage de moyens (40) de fixation sur un arbre moteur.

10. Double volant amortisseur selon la revendication 9, **caractérisé en ce que** le bord périphérique de l'orifice central du volant primaire (10) comprend, au voisinage immédiat des orifices (26) de passage des moyens (40) de fixation, des échancrures (142) s'étendant dans la zone de soudure.

11. Double volant amortisseur selon l'une des revendications 1 à 10, **caractérisé en ce que** les bagues (32,34,132,134) du roulement forment une entretoise axiale entre les volants (10,14).

12. Double volant amortisseur selon l'une des revendications 1 à 11, **caractérisé en ce que** les bagues (132,134) du roulement sont en tôle.

13. Double volant amortisseur selon l'une des revendications 1 à 12, **caractérisé en ce que** le volant primaire (10) est axialement flexible.

14. Double volant amortisseur selon l'une des revendications 1 à 13, **caractérisé en ce que** le prolongement axial (32a,34a,134b) d'une bague du roulement sert au centrage d'au moins une partie des moyens de friction d'un amortisseur de torsion (12) monté entre les deux volants.

15. Double volant amortisseur selon la revendication 14, **caractérisé en ce que** les moyens de friction (136,138,140) sont centrés sur un prolongement axial (134b) de la bague interne (134) du roulement qui est soudée par un autre prolongement axial (134a) sur le volant primaire (10).

16. Double volant amortisseur selon la revendication 14, **caractérisé en ce que** les moyens de friction (72,80) de l'amortisseur de torsion sont portés par une pièce cylindrique (68) qui est centrée sur les prolongements axiaux (32a,34a) des bagues du roulement.

## Claims

1. Double damping flywheel, in particular for a motor vehicle, comprising a primary inertia flywheel (10) and a secondary inertia flywheel (14), which is centred and guided on the primary inertia flywheel by a bearing with inner and outer rings (32, 34) which are secured by means of axial support and welding of one of their ends respectively on the primary inertia flywheel (10) and on the secondary inertia flywheel (14), or conversely, **characterised in that** at least one of the rings (32, 34) comprises an axial extension (32a, 34a) which extends on one side of the bearing (28), and the free end of which is secured by a welding bead onto one of the inertia flywheels.

2. Double damping flywheel according to claim 1, **characterised in that** the axial extension (32a, 34a) is cylindrical.

3. Double damping flywheel according to claim 1 or 2, **characterised in that** each ring (32, 34) of the bearing comprises at least one aforementioned axial extension (32a, 34a).

4. Double damping flywheel according to claim 3, **characterised in that** the axial extension (32a) of a ring (32) extends on one side of the bearing, and the axial extension (34a) of the other ring (34) extends on the other side of the bearing.

5. Double damping flywheel according to one of the preceding claims, **characterised in that** the length of the axial extension (32a, 34a) of a ring is contained between approximately 20 and approximately 50% of the total length of the ring.

6. Double damping flywheel according to one of claims 1 to 5, **characterised in that** the or each ring is welded by axial support and capacitor discharge.

7. Double damping flywheel according to one of claims 1 to 6, **characterised in that** the inner ring (34) of the bearing is secured to the secondary flywheel (32), and the outer ring (32) is secured to the primary flywheel (10).

8. Double damping flywheel according to one of claims 1 to 6, **characterised in that** the inner ring (134) of the bearing is secured to the primary flywheel (10), and the outer ring (132) is secured to the secondary flywheel (14).

9. Double damping flywheel according to one of claims 1 to 8, **characterised in that** the welding areas of the rings of the bearing on the primary (10) and secondary (14) flywheels extend between the peripheral edge of a central aperture in each flywheel, and apertures (26) of passage of means (40) for securing on a drive shaft.

10. Double damping flywheel according to claim 9, **characterised in that** the peripheral edge of the central aperture in the primary flywheel (10) comprises, in the immediate vicinity of the apertures (26) of passage of the securing means (40), cut-outs (142) which extend in the welding area.

11. Double damping flywheel according to one of claims 1 to 10, **characterised in that** the rings (32, 34, 132, 134) of the bearing form an axial gap between the flywheels (10, 14).

12. Double damping flywheel according to one of claims 1 to 11, **characterised in that** the rings (132, 134) of the bearing are made of plate.

13. Double damping flywheel according to one of claims 1 to 12, **characterised in that** the primary flywheel (10) is flexible axially.

14. Double damping flywheel according to one of claims 1 to 13, **characterised in that** the axial extension (32a, 34a, 134b) of a ring of the bearing is used for centring of at least part of the friction means of a torsion damper (12) which is fitted between the two flywheels.

15. Double damping flywheel according to claim 14, **characterised in that** the friction means (136, 138, 140) are centred on an axial extension (134b) of the inner ring (134) of the bearing which is soldered by another axial extension (134a) onto the primary flywheel (10).

16. Double damping flywheel according to claim 14, **characterised in that** the friction means (72, 80) of the torsion damper are supported by a cylindrical part (68) which is centred on the axial extensions (32a, 34a) of the rings of the bearing.

## Patentansprüche

1. Doppeldämpfungsschwungrad, insbesondere für ein Kraftfahrzeug, umfassend ein Primärschwungrad (10) und ein Sekundärschwungrad (14), welches zentriert und geführt ist auf dem Primärschwungrad durch ein Lager mit einem inneren und einem äußeren Ring (32, 34), die durch axiale Anlage und Schweißen eines ihrer Enden jeweils an dem Primärschwungrad (10) und an dem Sekundärschwungrad (14) befestigt sind, oder umgekehrt, **dadurch gekennzeichnet, dass** zumindest einer der Ringe (32, 34) eine axiale Verlängerung (32a, 34a) umfasst, welche sich auf einer Seite des Lagers (28) erstreckt und deren freies Ende durch einen Schweißstrang an einem der Schwungräder befestigt ist.

2. Doppeldämpfungsschwungrad nach Anspruch 1, **dadurch gekennzeichnet, dass** die axiale Verlängerung (32a, 34a) zylindrisch ist.

3. Doppeldämpfungsschwungrad nach Anspruch 1 oder 2, **dadurch gekennzeichnet, dass** jeder Ring (32, 34) mindestens eine vorgenannte axiale Verlängerung (32a, 34a) umfasst.

4. Doppeldämpfungsschwungrad nach Anspruch 3, **dadurch gekennzeichnet, dass** die axiale Verlängerung (32a) eines Rings (32) sich auf einer Seite des Lagers erstreckt und die axiale Verlängerung (34a) des anderen Rings (34) sich auf der anderen Seite des Lagers erstreckt.

5. Doppeldämpfungsschwungrad nach einem der vorangehenden Ansprüche, **dadurch gekennzeichnet, dass** die Länge der axialen Verlängerung (32a, 34a) eines Rings zwischen etwa 20 und etwa 50% der Gesamtlänge des Rings beträgt.

6. Doppeldämpfungsschwungrad nach einem der Ansprüche 1 bis 5, **dadurch gekennzeichnet, dass** der oder jeder Ring durch axiale Anlage und Kondensator-Entladung geschweißt ist.

7. Doppeldämpfungsschwungrad nach einem der Ansprüche 1 bis 6, **dadurch gekennzeichnet, dass** der innere Ring (34) des Lagers an dem Sekundärschwungrad (14) und der äußere Ring (32) an dem Primärschwungrad (10) befestigt ist.

8. Doppeldämpfungsschwungrad nach einem der Ansprüche 1 bis 6, **dadurch gekennzeichnet, dass** der innere Ring (134) des Lagers an dem Primärschwungrad (10) und der äußere Ring (132) an dem Sekundärschwungrad (14) befestigt ist.

9. Doppeldämpfungsschwungrad nach einem der Ansprüche 1 bis 8, **dadurch gekennzeichnet, dass** die Schweißzonen der Lagerringe an dem Primärschwungrad (10) und dem Sekundärschwungrad (14) zwischen dem Umfangsrand einer zentralen Öffnung von jedem Schwungrad und Öffnungen (26) zum Durchgang von Mitteln (40) zur Befestigung an einer Motorwelle liegen.

10. Doppeldämpfungsschwungrad nach Anspruch 9, **dadurch gekennzeichnet, dass** der Umfangsrand der zentralen Öffnung des Primärschwungrads (10) in unmittelbarer Nachbarschaft der Öffnungen (26) für den Durchgang der Befestigungsmittel (40) Einbuchtungen (142) umfasst, die in der Schweißzone liegen.

11. Doppeldämpfungsschwungrad nach einem der Ansprüche 1 bis 10, **dadurch gekennzeichnet, dass** die Lagerringe (32, 34, 132, 134) eine axiale Querstütze zwischen den Schwungrädern (10, 14) bilden.

12. Doppeldämpfungsschwungrad nach einem der Ansprüche 1 bis 11, **dadurch gekennzeichnet, dass** die Lagerringe (132, 134) aus Blech bestehen.

13. Doppeldämpfungsschwungrad nach einem der Ansprüche 1 bis 12, **dadurch gekennzeichnet, dass** das Primärschwungrad (10) axial flexibel ist.

14. Doppeldämpfungsschwungrad nach einem der Ansprüche 1 bis 13, **dadurch gekennzeichnet, dass** die axiale Verlängerung (32a, 34a, 134b) von einem Lagerring zur Zentrierung von mindestens einem Teil der Reibungsmittel eines zwischen den beiden Schwungrädern montierten Torsionsdämpfers (12) dient.

15. Doppeldämpfungsschwungrad nach Anspruch 14, **dadurch gekennzeichnet, dass** die Reibungsmittel (136, 138, 140) auf einer axialen Verlängerung (134b) des inneren Lagerrings (134) zentriert sind, der durch eine andere axiale Verlängerung (134a) an das Primärschwungrad (10) geschweißt ist.

16. Doppeldämpfungsschwungrad nach Anspruch 14, **dadurch gekennzeichnet, dass** die Reibungsmittel (72, 80) des Torsionsdämpfers von einem zylindrischen Teil (68) getragen sind, der auf den axialen Verlängerungen (32a, 34a) des Lagerrings zentriert ist.
